# EUROPEAN PATENT APPLICATION

(11) **EP 4 491 603 A1**
(43) Date of publication of application: **15.01.2025**
(21) Application number: 23766814.0
(22) Date of filing: 07.03.2023
(51) Int. Cl.: C05C 11/00, B01J 2/00, C05G 5/12

(54) **METHOD FOR PRODUCING GRANULAR COMPOSITION CONTAINING GLUTATHIONE**

(30) Priority: 07.03.2022 JP 2022034075
(71) Applicant: Kaneka Corporation, Osaka-shi, Osaka 530-8288 (JP)
(72) Inventor: WATANABE Toyoaki, Takasago-shi, Hyogo 676-8688 (JP); UEKITA Ken, Takasago-shi, Hyogo 676-8688 (JP)
(74) Representative: Hoffmann Eitle
(86) International application number: PCT/JP2023/008449
(87) International publication number: WO 2023/171638

(57) **Abstract**

In a method for producing a granular composition comprising glutathione, the decrease in productivity due to a noticeable increase in the bonding force between pieces of the solid raw material during granulation is prevented or controlled. One or more embodiments of the present invention relate to a method for producing a granular composition comprising glutathione, the method comprising granulating a raw material mixture comprising glutathione and a water-soluble nitrogen-containing fertilizer component, the water-soluble nitrogen-containing fertilizer component having a solubility of 10% or less in water at 20°C, the raw material mixture having a mineral support content of 1 mass% or less on a dry matter basis.

## Description

### Technical Field

The present invention relates to a method for producing a granular composition comprising glutathione.

### Background Art

Glutathione, which is a peptide composed of three amino acids, namely, L-cysteine, L-glutamic acid, and glycine, exists in many organisms including not only humans but also other animals, plants, and microorganisms, and is a compound important for an organism in terms of active oxygen elimination, detoxication, amino acid metabolism, and the like.

In an organism, glutathione exists in either of the following forms: reduced glutathione (*N*-(*N*-γ-L-glutamyl-L-cysteinyl)glycine, hereinafter referred to as "GSH" in some cases) in which the thiol group of an L-cysteine residue has a form of reduced SH; and oxidized glutathione (hereinafter referred to as "GSSG" in some cases) having a form in which the thiol groups of the L-cysteine residues of two GSH molecules are oxidized to form a disulfide bond between the two glutathione molecules. Glutathione is known to be useful in the fields of fertilizers, medicaments, cosmetics, and the like.

On the other hand, allantoin (5-ureidohydantoin) is an intermediate product generated in a process of decomposition of a nucleobase (purine base). In a plant, allantoin is generated from 5-hydroxyisouric acid by allantoin synthase (AS) and decomposed into allantoic acid by allantoinase (ALN). Non-Patent Literature 1 discloses that an aln-1 variant strain of *Arabidopsis thaliana* produced by variation by destroying the ALN gene to allow allantoin accumulation in a plant has higher drought stress resistance than a wild-type strain.

Patent Literature 1 describes a problem in that, when a material (solid component) comprising glutathione is granulated while being supplemented with a liquid binder such as water, the bonding force (stickiness) of the material increases noticeably, causing the material to stick to a device during granulation and the particle diameter of the granulated product to increase, and thus failing to provide a granulated product having a desired particle diameter. Furthermore, Patent Literature 1 discloses, as a means for solving these problems, a method for producing a granular composition comprising glutathione, the method comprising granulation with adding a liquid binder to a solid component comprising a crystalline form of glutathione.

Patent Literature 2 discloses a fertilizer composition to be applied to a plant leaf, wherein the fertilizer composition is characterized by containing oxidized glutathione and a fertilizer component. Patent Literature 2 describes that the fertilizer composition may be a granular water-soluble preparation. Patent Literature 2 further describes that the fertilizer component may be a nitrogen-containing fertilizer such as ammonium sulfate, ammonium nitrate, ammonium chloride, urea, or lime nitrogen.

Patent Literature 3 discloses a high-temperature stress resistance improving agent containing allantoin as an active component, and aimed at improving the high-temperature stress resistance of a plant. Patent Literature 3 describes that the high-temperature stress resistance improving agent may further comprise a known fertilizer component.

Patent Literature 4 discloses, as a glutathione-comprising granular fertilizer having an enhanced glutathione-storage stability and sufficient strength, a granular fertilizer comprising glutathione and/or a salt thereof, a mineral substance, and starch, wherein the starch is in an amount of 12 mass% or more with respect to the total amount of the granular fertilizer. Patent Literature 4 describes that the granular fertilizer may further comprise an element useful as a fertilizer, such as potassium, nitrogen, or phosphorus.

Patent Literature 5 discloses a method for cultivating a *Glycyrrhiza* plant, comprising a step of cultivating the *Glycyrrhiza* plant in the presence of glutathione or a derivative thereof, in which method glutathione or a derivative of the glutathione in the form of granules may be used, and in which glutathione or a derivative thereof or a composition comprising the same may be applied to the plant, in mixture with a conventional known fertilizer or an agent such as a plant hormone.

### Citation List

### Patent Literature

Patent Literature 1: JP2018-168103A
Patent Literature 2: WO2017/006869
Patent Literature 3: JP2017-137281A
Patent Literature 4: WO2018/135612
Patent Literature 5: JP2017-104102A

### Non-Patent Literature

Non-Patent Literature 1: Watanabe, S. et.al., Plant Cell Environ. 37: 1022-1036 (2014)

### Summary of Invention

### Technical Problem

As described in Patent Literature 1, a method in which a solid raw material comprising glutathione is granulated to produce a granular composition causes a problem in that the bonding force between pieces of the solid raw material rises noticeably during granulation, causing the pieces to stick to a device during granulation and the granulated product to become coarse, and thus reducing productivity.

In view of the above, disclosed herein is a means for solving a problem of coarsening of a granulated product in a method for producing a granular composition comprising glutathione by granulation.

### Solution to Problem

The present inventors have discovered that the above-described problem can be solved by a method for producing a granular composition comprising glutathione, the method comprising granulating a raw material mixture comprising glutathione and a water-soluble nitrogen-containing fertilizer component such as allantoin, the water-soluble nitrogen-containing fertilizer component having a solubility of 10% or less in water at 20°C, the raw material mixture having a mineral support content of 1 mass% or less on a dry matter basis. Specifically, the following are disclosed as means for solving the above-described problems.
(1) A method for producing a granular composition comprising glutathione, the method comprising
   granulating a raw material mixture comprising glutathione and a water-soluble nitrogen-containing fertilizer component, the water-soluble nitrogen-containing fertilizer component having a solubility of 10% or less in water at 20°C, the raw material mixture having a mineral support content of 1 mass% or less on a dry matter basis.
(2) The method according to (1), wherein the nitrogen-containing fertilizer component is at least one component selected from the group consisting of allantoin, histidine, and isoleucine.
(3) The method according to (1), wherein the nitrogen-containing fertilizer component is allantoin.
(4) The method according to any one of (1) to (3), wherein the glutathione is oxidized glutathione.
(5) The method according to any one of (1) to (4), wherein the raw material mixture comprises 40 parts by mass or more of the nitrogen-containing fertilizer component with respect to 100 parts by mass of the glutathione.
(6) The method according to any one of (1) to (5), wherein the raw material mixture further comprises one or more inorganic salts selected from the group consisting of nitrogen-containing inorganic salts, phosphorus-containing inorganic salts, and potassium-containing inorganic salts, and
   wherein the raw material mixture has a total content of the glutathione, the nitrogen-containing fertilizer component, and the inorganic salt of 70 mass% or more on a dry matter basis.

The present specification encompasses the disclosure of Japanese Patent Application No. 2022-034075 that serves as a basis for the priority of the present application.

### Advantageous Effects of Invention

A method for producing a granular composition comprising glutathione as disclosed herein can prevent or control a decrease in productivity caused by a noticeable increase in the bonding force between pieces of the solid raw material during granulation.

### Description of Embodiments

### <Glutathione>

The glutathione may be reduced glutathione (GSH, *N*-(*N*-γ-L-glutamyl-L-cysteinyl)glycine), oxidized glutathione (GSSG) in which two GSH molecules are bound via a disulfide bond, or a mixture of GSH and GSSG. The glutathione is preferably GSSG.

The glutathione (GSSG or GSH) may encompass various forms of glutathione, such as free forms neither bound to another substance nor ionized, salts, hydrates, and mixtures of two or more thereof.

When used as the glutathione, GSSG may be used in a mixture of GSSG and GSH, and the content of GSSG is preferably relatively larger than the content of GSH. More preferably, the total weight of GSSG (in terms of free forms) with respect to the total weight of GSSG and GSH (all in terms of free forms) is 70 mass% or more, more preferably 80 mass% or more, more preferably 90 mass% or more, still more preferably 95 mass% or more, still more preferably 98 mass% or more, most preferably 100 mass%.

A salt of GSSG is not particularly limited, provided that it is one or more salts acceptable as fertilizers, such as ammonium salts, calcium salts, magnesium salts, sodium salts, or lithium salts, and is preferably one or more salts selected from the group consisting of ammonium salts, calcium salts, and magnesium salts. Examples of the GSSG salt include monoammonium salts of GSSG, hemicalcium salts or monocalcium salts of GSSG, and hemimagnesium salts or monomagnesium salts of GSSG.

### <Water-Soluble Nitrogen-Containing Fertilizer Component>

In a method according to one or more embodiments of the present invention, a raw material mixture comprising glutathione and a water-soluble nitrogen-containing fertilizer component is granulated, wherein the water-soluble nitrogen-containing fertilizer component has a solubility of 10% or less in water at 20°C, and wherein the raw material mixture has a mineral support content of 1 mass% or less on a dry matter basis. This method allows the prevention or control of an increase in bonding force between pieces of the raw material during granulation, sticking of the material to a device during granulation, and coarsening of the granulated product, compared with using a raw material mixture not comprising the nitrogen-containing fertilizer component. There is conventionally a known technology in which a mineral support such as talc is blended with a granulating raw material in order to control the bonding force between pieces of the raw material during granulation to prevent or control coarsening of the granulated product. However, blending a large amount of water-insoluble mineral support with a granular composition comprising glutathione may limit its use. In a method according to one or more embodiments of the present invention, the above-described object can be achieved by blending the nitrogen-containing fertilizer component with a raw material mixture comprising glutathione and having a mineral support content of 1 mass% or less on a dry matter basis.

The nitrogen-containing fertilizer component has a solubility in water of preferably 0.1% or more, more preferably 0.3% or more, preferably 3% or less, more preferably 1% or less at 20°C. Additionally, in one preferable aspect, the nitrogen-containing fertilizer component has a solubility in water of 5% or less at 20°C. Here, the solubility (%) refers to a percentage of the mass of the nitrogen-containing fertilizer component that is soluble in a predetermined amount of water at 20°C based on the mass of the predetermined amount of water. Specifically, the percentage can be expressed as the number of grams of the nitrogen-containing fertilizer component that is soluble in 100 ml of water at 20°C. For example, the solubility of a component that is soluble at 1 g in 100 ml of water at 20°C can be expressed as 1 g/100 ml = 1%.

The nitrogen-containing fertilizer component is, for example, at least one component selected from the group consisting of allantoin, histidine, and isoleucine, and is preferably allantoin.

Allantoin is also called 5-ureidohydantoin, and a free form thereof has a structure represented by the following formula.

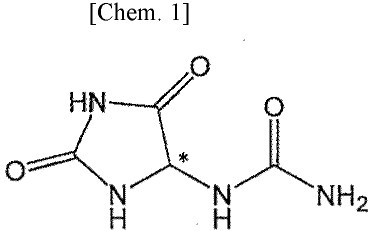

Allantoin has one asymmetric carbon (represented by * in the formula), and is in the form of (R)-allantoin or (S)-allantoin. An allantoin to be used in one or more embodiments of the present invention may be (R)-allantoin, (S)-allantoin, or a mixture thereof. The allantoin can be synthesized, for example, from glyoxylic acid and urea. Alternatively, the allantoin may be derived or obtained from a plant or a microorganism.

Histidine and isoleucine may be the L-form, the D-form, or a mixture of the **L-**form and the D-form. The L-form is preferably used. Histidine and isoleucine may be produced, for example, by an organic synthesis method or a biochemical method utilizing an enzyme or the like.

The allantoin may encompass various forms of allantoin, such as free forms neither bound to another substance nor ionized, salts, hydrates, and mixtures of two or more thereof. Similarly, histidine and isoleucine may also encompass various forms of histidine and isoleucine, such as free forms that are neither bound to another substance nor ionized, salts, hydrates, and mixtures of two or more thereof.

### <Granular Composition>

A granular composition comprising glutathione, as produced by a method according to one or more embodiments of the present invention, is not particularly limited to any use. For example, the granular composition can be used to be applied to a plant.

The granular composition is obtained by granulating a raw material mixture comprising glutathione and the nitrogen-containing fertilizer component and having a mineral support content of 1 mass% or less on a dry matter basis.

The glutathione content in the granular composition is not particularly limited and can be adjusted according to the use of the granular composition or the like. The glutathione content can be, for example, 1 mass% or more, preferably 3 mass% or more, more preferably 5 mass% or more, for example, 40 mass% or less, preferably 20 mass% or less, with respect to the total amount of the granular composition on a dry matter basis. These ranges are particularly preferable when the granular composition is used to facilitate the growth of a plant.

The granular composition is not particularly limited to any form, provided that the granular composition is granular, and may be, for example, a granule. As used herein, the granular form is any form formed by primary particles of a material which are bonded to one another by a granulation process. The granular composition is not limited to any size, and is, for example, in the form of granules each having the longest diameter of 0.20 mm or more and 2.0 mm or less.

The granular composition has a mineral support content of 1 mass% or less (encompassing a case where the granular composition is free of mineral support), more preferably 0.5 mass% or less, still more preferably 0.2 mass% or less, on a dry matter basis, and is particularly preferably free of mineral support. Examples of the mineral support include talc, mica, bentonite, montmorillonite, smectite, clay, kaolin, activated white earth, zeolite, diatomaceous earth, perlite, Zeeklite, sericite, pumice stone, silica, white carbon, vermiculite, and calcium carbonate. The total content thereof is preferably within the above-described range.

### <Raw Material Mixture>

In one or more embodiments of the present invention, a raw material mixture comprising glutathione and the nitrogen-containing fertilizer component and having a mineral support content of 1 mass% or less on a dry matter basis is granulated. The raw material mixture refers to a mixture of solid raw materials excluding the liquid binder described below.

In a more preferable embodiment, the raw material mixture comprises the nitrogen-containing fertilizer component in an amount of preferably 40 parts by mass or more, more preferably 50 parts by mass or more, more preferably 100 parts by mass or more, with respect to 100 parts by mass of the glutathione. In this case, coarsening of the granular composition during granulation is particularly likely to be prevented or controlled.

In a still more preferable embodiment, the raw material mixture comprises the nitrogen-containing fertilizer component in an amount of 2000 parts by mass or less, more preferably 1800 parts by mass or less, more preferably 1600 parts by mass or less, particularly preferably 1000 parts by mass or less, with respect to 100 parts by mass of the glutathione. In this case, formation of fine powder during granulation is likely to be prevented or controlled.

The raw material mixture has a mineral support content of 1 mass% or less (encompassing a case where the raw material mixture is free of mineral support), more preferably 0.5 mass% or less, still more preferably 0.2 mass% or less, on a dry matter basis, and is particularly preferably free of mineral support. Examples of the mineral support are as described above.

The raw material mixture may comprise an inorganic salt, a binding agent, or the like in addition to glutathione and the nitrogen-containing fertilizer component.

The inorganic salt is preferably an inorganic salt containing an element useful as a fertilizer, such as potassium, nitrogen, phosphorus, calcium, or magnesium, and is particularly preferably one or more inorganic salts selected from the group consisting of nitrogen-containing inorganic salts, phosphorus-containing inorganic salts, and potassium-containing inorganic salts.

Specific examples of the nitrogen-containing inorganic salt include ammonium sulfate and ammonium dihydrogenphosphate. Examples of the phosphorus-containing inorganic salt include ammonium dihydrogenphosphate. Examples of the potassium-containing inorganic salt include potassium sulfate.

In an embodiment in which the raw material mixture comprises glutathione, the nitrogen-containing fertilizer component, and one or more inorganic salts selected from the group consisting of nitrogen-containing inorganic salts, phosphorus-containing inorganic salts, and potassium-containing inorganic salts, the raw material mixture has a total content of the glutathione, the nitrogen-containing fertilizer component, and the inorganic salt(s) of preferably 70 mass% or more, more preferably 80 mass% or more, more preferably 90 mass% or more, still more preferably 95 mass% or more, on a dry matter basis. The present embodiment can provide a granular composition having high water-solubility and suitable for application to a plant. In the present embodiment, the raw material mixture has a total content of the glutathione, the nitrogen-containing fertilizer component, and the inorganic salt(s) of preferably 100 mass% or less, more preferably 99 mass% or less, on a dry matter basis.

Examples of the binding agent include: carboxymethyl cellulose, methyl cellulose, ethyl cellulose, polyvinyl pyrrolidone, pullulan, acrylic acid-based polymer, polyvinyl alcohol, gelatin, agar, gum arabic, gum arabic powder, xanthan gum, trant gum, guar gum, gellan gum, locust bean gum, pregelatinized starch, macrogol, starch, soluble starch, dextrin, gum tragacanth, β-glucan, pectin, casein, soy protein, hydroxyethyl cellulose, acetyl cellulose, lignin sulfonic acid, carboxymethyl starch, hydroxyethyl starch, polyvinylmethyl ether, hydroxypropyl cellulose, hydroxypropylmethyl cellulose, polyethylene glycol, polyethylene oxide, polyvinyl pyrrolidone, shellac, rosin, tall oil, ester gum, polyvinyl acetate, polylactic acid, polyvinyl chloride, polyester, polyurea, polyamide, coumarone resin, biodegradable polymer, paraffin wax, microcrystalline wax, petrolatum, montan wax, carnauba wax, cotton wax, beeswax, lanoline, polymeric nonionic surfactants, polymeric anionic surfactants, polymeric cationic surfactants, polymeric zwitterionic surfactants, and alginic acid (which are polymer compounds); sodium silicate, glycerin, animal oil and vegetable oil, fat, liquid paraffin, heavy oil, glucose, sucrose, mannitol, sorbitol, nonpolymeric nonionic surfactants, nonpolymeric anionic surfactants, nonpolymeric cationic surfactants, and nonpolymeric zwitterionic surfactants (which are nonpolymer compounds); and salts thereof. At least one selected from the group consisting of them can be used.

An example of a particularly preferable binding agent is a binding agent of a polymer compound. At least one selected from the group consisting of carboxymethyl cellulose and salts thereof, polyvinyl alcohol, starch, gum arabic, hydroxyethyl cellulose, lignin sulfonic acid and salts thereof, and polyethylene glycol is particularly preferable. Examples of the salt of carboxymethyl cellulose include: salts of alkali metals, such as sodium, potassium, and lithium; and salts of alkaline earth metals, such as magnesium and calcium. Carboxymethyl cellulose and salts thereof conceivably contribute to improving the storage stability of glutathione in the composition. Using such a binding agent may achieve sustained release of glutathione when the granular composition is used for application to a plant. When at least one selected from the group consisting of carboxymethyl cellulose and salts thereof, polyvinyl alcohol, starch, gum arabic, hydroxyethyl cellulose, lignin sulfonic acid and salts thereof, and polyethylene glycol is used as a binding agent, the content of the binding agent with respect to the total amount of the granular composition or the raw material mixture on a dry matter basis can be preferably 0.5 to 5 mass%, more preferably 1 to 3 mass%.

Another example of a preferable binding agent is a nonpolymeric anionic surfactant, particularly a linear alkyl benzene sulfonic acid or a salt thereof. When a nonpolymeric anionic surfactant is used as a binding agent, the content of the binding agent with respect to the total amount of the granular composition or the raw material mixture on a dry matter basis can be preferably 0.3 to 3 mass%, more preferably 0.5 to 2 mass%.

The raw material mixture may further comprise an organic support, an excipient, or the like.

Examples of the organic support include: dry plant materials such as rice hulls, sawdust, soybean flour, corn stem, and vegetable fiber; and organic porous supports such as pulp flocs and activated carbon.

Examples of the excipient include lactose, trehalose, and cellulose.

### <Method for Producing Granular Composition>

A method for producing a granular composition comprising glutathione according to one or more embodiments of the present invention is characterized by
comprising granulating a raw material mixture comprising glutathione and the nitrogen-containing fertilizer component and having a mineral support content of 1 mass% or less on a dry matter basis.

A method according to the present embodiment can prevent or control an increase in the bonding force between pieces of the raw material during granulation, thereby preventing or controlling sticking of the material to a device during granulation and coarsening of the granulated product. Hence, the productivity of the granular composition is high.

The granulation method is not particularly limited, and a granulation method such as agitation granulation or extrusion granulation can be utilized.

The raw material mixture to be granulated is a powdery solid raw material mixture preferably having an average particle diameter of 55 to 210 µm, more preferably 60 to 200 µm, more preferably 71 to 200 µm. The powdery solid raw material mixture having an average particle diameter within the above-mentioned range comprises particles having a particle diameter in the range of from 20 to 500 µm in an amount of preferably 70 mass% or more, more preferably 80 mass% or more.

It is preferable to carry out a pulverizing step of pulverizing the raw material mixture to allow the average particle diameter to fall within the above-mentioned range before granulation. The pulverizing step may be carried out using a mixer, a mill, or the like.

The particle diameter of the raw material mixture herein refers to the sphere-equivalent diameter of the particles of the raw material mixture, as determined by a light scattering method (in which the particle diameter is calculated from how laser light is scattered when a specimen is irradiated with the laser light). Examples of a device for measuring the particle diameter by a light scattering method include a laser diffraction/scattering particle size distribution analyzer, LA-960, manufactured by Horiba, Ltd. The average particle diameter of the raw material mixture refers to an average value calculated on a volume basis from the particle diameter distribution of the raw material mixture obtained by a light scattering method.

The granulation step is preferably a step in which the raw material mixture is agitated together with a liquid binder. Examples of the liquid binder include liquids such as water and alcohol as well as molasses and pulp spent liquor. These may be used individually or in combination. Additionally, the above-described binding agent may be dissolved in a liquid such as water or alcohol to form a liquid binder. The liquid binder is particularly preferably water.

For the granulation step, the conditions can be set appropriately to obtain a granular composition sized for the intended use.

The granulation step preferably further comprises a drying step of drying the granular composition to remove a volatile component derived from the raw material mixture and the liquid binder. Additionally, a granular composition having a desired particle diameter may be separated and collected by sieving or the like, if desired.

### Examples

### <Experiment 1: Extrusion Granulation>

Using an oxidized glutathione (GSSG)-comprising solid raw material mixture supplemented with a stickiness-controlling component, a GSSG-comprising granular composition was produced by extrusion granulation. The relationship between the load on the motor of the granulator during granulation and the percentages of large granules (>1.7 mm) and fine powder (<0.25 mm) in the granulated product and the percentage of the added stickiness-controlling component was investigated.

### <Raw Materials>

As solid raw materials, the components shown in the following Table were used.

As the stickiness-controlling component, allantoin was used. As the inorganic salts, a mixture of ammonium sulfate, ammonium dihydrogenphosphate, and potassium sulfate at a mass ratio of 3:4:5 was used. The solubility of allantoin in water at 20°C was 0.5 g/100 mL (0.5%).

**[Table 1]**

| Component | Formulation 1 | Formulation 2 | Formulation 3 | Formulation 4 | Formulation 5 | Formulation 6 |
|---|---|---|---|---|---|---|
| Oxidized glutathione monoammonium salt | 5 | 5 | 5 | 5 | 5 | 5 |
| Allantoin | 0 | 5 | 10 | 20 | 40 | 80 |
| Inorganic salts | 92 | 87 | 82 | 72 | 52 | 12 |
| Carboxymethyl cellulose | 2 | 2 | 2 | 2 | 2 | 2 |
| Sodium linear alkyl benzene sulfonate | 1 | 1 | 1 | 1 | 1 | 1 |

| | | | | | | |
|---|---|---|---|---|---|---|
| Unit: mass% | | | | | | |

### As the liquid binder, water was used.

### <Pulverization>

Each mixture of the solid raw materials prepared according to the formulation shown in Table 1 was pulverized with a pulverizer to an average particle diameter of approximately 100 µm. Here, the average particle diameter is an average value calculated on volume basis from the distribution of the sphere-equivalent diameters determined by a light scattering method using a laser diffraction/scattering particle size distribution analyzer, LA-960, manufactured by Horiba, Ltd.

### <Granulation>

The pulverized product of the solid raw material mixture was weighed in an amount of 500 g, to which 50 g of water as a liquid binder was added, and the resulting mixture was kneaded with a mixer. The kneaded mixture was extrusion-granulated through a screen having a pore diameter of 0.8 mm, using an extrusion granulator (model MG-55-1, manufactured by Dalton Corporation). The granular product obtained by extrusion granulation was processed to an appropriate particle diameter using a spheronizer (model QJ-230T-2, manufactured by Dalton Corporation) for 10 seconds, and dried with a fluid bed dryer (model F-LABO, manufactured by Nagato Denki Mfg. Co., Ltd.). The dried products obtained were classified by oscillating sieving, using sieves having an opening of 1.7 mm and 0.25 mm respectively. The fraction that passed through the sieve having an opening of 1.7 mm and did not pass through the sieve having an opening of 0.25 m was collected as a GSSG-comprising granular composition.

### <Results>

### <Evaluation of Load on Granulator>

The load on the motor of the granulator during extrusion granulation was recorded.

The case where the load on the motor was 4.0 amperes or less was rated "+", and the case where the load on the motor was more than 4.0 amperes was rated "-".

The following Table shows the loads on the motor of the granulator during the extrusion granulation performed using the solid raw materials of Formulations 1 to 6, which had different percentages of added allantoin used as the stickiness-controlling component.

**[Table 2]**

| | Formulation 1 | Formulation 2 | Formulation 3 | Formulation 4 | Formulation 5 | Formulation 6 |
|---|---|---|---|---|---|---|
| Load on motor (amperes) | 4.3 | 3.0 | 2.6 | 2.4 | 2.4 | 2.3 |
| Rating | - | + | + | + | + | + |

### <Evaluation of Productivity>

As the percentage of the large granules, the percentage (mass%) of the fraction that did not pass through the sieve having an opening of 1.7 mm based on the total amount of the dried granulated product was determined. The case where the percentage of the large granules was 20 mass% or less was rated "+", and the case where the percentage of the large granules was more than 20 mass% was rated "-".

Additionally, as the percentage of the fine powder, the percentage (mass%) of the fraction that passed through the sieve having an opening of 0.25 mm based on the total amount of the dried granulated product was determined. The case where the percentage of the fine powder was 20 mass% or less was rated "+", and the case where the percentage of the fine powder was more than 20 mass% was rated "-".

The following Table shows the evaluation results of the percentages of the large granules and the fine powder obtained by the extrusion granulation using the solid raw materials of Formulations 1 to 6, which had different percentages of added allantoin used as the stickiness-controlling component.

**[Table 3]**

| | Formulation 1 | Formulation 2 | Formulation 3 | Formulation 4 | Formulation 5 | Formulation 6 |
|---|---|---|---|---|---|---|
| Percentage of large granules (mass%) | 32 | 13 | 8 | 3 | 3 | 2 |
| Rating of percentage of large granules | - | + | + | + | + | + |
| Percentage of fine powder (mass%) | 1 | 1 | 1 | 1 | 13 | 19 |
| Rating of percentage of fine powder | + | + | + | + | + | + |

### <Use of Serine in place of Allantoin>

Formulation 7 was the same formulation as Formulation 4, except that 20 mass% allantoin in the solid raw materials was replaced with the same amount of serine. The solid raw materials of Formulation 7 were extrusion-granulated by the same operation as described above, and the resulting granulated product was evaluated. The solubility of the serine in water at 20°C was 25 g/100 mL (25%).

The following Tables show the evaluation results of the load on the motor of the granulator and the percentages of the large granules and the fine powder in the extrusion granulation using the solid raw materials of Formulation 7.

**[Table 4]**

| | Formulation 7 |
|---|---|
| Load on motor (amperes) | 4.5 |
| Rating | - |

**[Table 5]**

| | Formulation 7 |
|---|---|
| Percentage of large granules (mass%) | 41 |
| Rating of percentage of large granules | - |
| Percentage of fine powder (mass%) | 1 |
| Rating of percentage of fine powder | + |

### <Use of L-histidine or L-isoleucine in place of Allantoin>

Formulation 9, Formulation 10, and Formulation 11 were the same formulations as Formulation 2, Formulation 4, and Formulation 6, respectively, except that allantoin (5, 20, and 80 mass% respectively) in the solid raw materials was replaced with the same amount of L-histidine. The solubility of the L-histidine in water at 20°C was 4.2 g/100 mL (4.2%).

Formulation 12, Formulation 13, and Formulation 14 were the same formulations as Formulation 2, Formulation 4, and Formulation 6, respectively, except that allantoin (5, 20, and 80 mass% respectively) in the solid raw materials was replaced with the same amount of L-isoleucine. The solubility of the L-isoleucine in water at 20°C was 4.0 g/100 mL (4.0%).

Formulation 9, Formulation 10, Formulation 11, Formulation 12, Formulation 13, and Formulation 14 are shown in the following Table.

**[Table 6]**

| Component | Formulation 9 | Formulation 10 | Formulation 11 | Formulation 12 | Formulation 13 | Formulation 14 |
|---|---|---|---|---|---|---|
| Oxidized glutathione monoammonium salt | 5 | 5 | 5 | 5 | 5 | 5 |
| L-histidine | 5 | 20 | 80 | - | - | - |
| L-isoleucine | - | - | - | 5 | 20 | 80 |
| Inorganic salts | 87 | 72 | 12 | 87 | 72 | 12 |
| Carboxymethyl cellulose | 2 | 2 | 2 | 2 | 2 | 2 |
| Sodium linear alkyl benzene sulfonate | 1 | 1 | 1 | 1 | 1 | 1 |

| | | | | | | |
|---|---|---|---|---|---|---|
| Unit: mass% | | | | | | |

The solid raw materials of Formulation 9, Formulation 10, Formulation 11, Formulation 12, Formulation 13, and Formulation 14 were extrusion-granulated by the same operation as described above, and the resulting granulated products were evaluated.

The following Tables show the evaluation results of the load on the motor of the granulator and the percentages of the large granules and the fine powder in the extrusion granulation using the solid raw materials of Formulation 9, Formulation 10, Formulation 11, Formulation 12, Formulation 13, and Formulation 14.

**[Table 7]**

| | Formulation 9 | Formulation 10 | Formulation 11 | Formulation 12 | Formulation 13 | Formulation 14 |
|---|---|---|---|---|---|---|
| Load on motor (amperes) | 3.2 | 2.9 | 2.7 | 3.3 | 2.9 | 2.7 |
| Rating | + | + | + | + | + | + |

**[Table 8]**

| | Formulation 9 | Formulation 10 | Formulation 11 | Formulation 12 | Formulation 13 | Formulation 14 |
|---|---|---|---|---|---|---|
| Percentage of large granules (mass%) | 15 | 5 | 4 | 15 | 6 | 4 |
| Rating of percentage of large granules | + | + | + | + | + | + |
| Percentage of fine powder (mass%) | 1 | 1 | 15 | 1 | 1 | 16 |
| Rating of percentage of fine powder | + | + | + | + | + | + |

### <Experiment 2: Agitation Granulation>

Using an oxidized glutathione (GSSG)-comprising solid raw material mixture supplemented with a stickiness-controlling component, a GSSG-comprising granular composition was produced by agitation granulation. After the agitation granulation, the relationship between the degree of sticking of the raw material to the inner wall of the device and the percentage of the added stickiness-controlling component was investigated.

### <Raw Materials>

As solid raw materials, the components shown in the following Table were used.

As the stickiness-controlling component, allantoin was used. As the inorganic salts, a mixture of ammonium sulfate, ammonium dihydrogenphosphate, and potassium sulfate at a mass ratio of 3:4:5 was used.

**[Table 9]**

| Component | Formulation 1 | Formulation 8 | Formulation 2 | Formulation 4 | Formulation 6 |
|---|---|---|---|---|---|
| Oxidized glutathione monoammonium salt | 5 | 5 | 5 | 5 | 5 |
| Allantoin | 0 | 2 | 5 | 20 | 80 |
| Inorganic salts | 92 | 90 | 87 | 72 | 12 |
| Carboxymethyl cellulose | 2 | 2 | 2 | 2 | 2 |
| Sodium linear alkyl benzene sulfonate | 1 | 1 | 1 | 1 | 1 |

| | | | | | |
|---|---|---|---|---|---|
| Unit: mass% | | | | | |

As the liquid binder, water was used.

### <Pulverization>

Each mixture of the solid raw materials prepared according to the formulation shown in Table 9 was pulverized with a pulverizer to an average particle diameter of approximately 100 µm. Here, the average particle diameter is an average value calculated on volume basis from the distribution of the sphere-equivalent diameters determined by a light scattering method using a laser diffraction/scattering particle size distribution analyzer, LA-960, manufactured by Horiba, Ltd.

### <Granulation>

The pulverized product of the solid raw material mixture was weighed in an amount of 500 g, to which 44 g of water as the liquid binder was added, and the resulting mixture was agitation-granulated using an agitation granulator (model SPGJ-2TG, manufactured by Dalton Corporation). The granular product obtained by agitation granulation was dried using a fluid bed dryer (model F-LABO, manufactured by Nagato Denki Mfg. Co., Ltd.).

### <Results>

### <Evaluation of Load on Granulator>

The load on the motor of the granulator during agitation granulation was recorded.

The case where the load on the motor was 3.0 amperes or less was rated "+", and the case where the load on the motor was more than 3.0 amperes was rated "-".

The following Table shows the loads on the motor of the granulator during the agitation granulation performed using the solid raw materials of Formulations 1, 8, 2, 4, and 6, which had different percentages of added allantoin used as the stickiness-controlling component.

**[Table 10]**

| | Formulation 1 | Formulation 8 | Formulation 2 | Formulation 4 | Formulation 6 |
|---|---|---|---|---|---|
| Load on motor (amperes) | 3.2 | 2.4 | 1.9 | 1.3 | 1.1 |
| Rating | - | + | + | + | + |

### <Evaluation of Productivity>

After completion of the agitation granulation, the inside of the device was cleaned by brushing, and then, the degree of sticking of the raw material to the wall near the agitating blade in the device was evaluated by visual observation. The case where the raw material stuck to less than 10% of the circumferential wall surface was rated "+"; the case where the raw material stuck to 10% or more and less than 50% of the circumferential wall surface was rated "±"; and the case where the raw material stuck to 50% or more of the circumferential wall surface was rated "-".

**[Table 11]**

| | Formulation 1 | Formulation 8 | Formulation 2 | Formulation 4 | Formulation 6 |
|---|---|---|---|---|---|
| Degree of sticking | - | ± | + | + | + |

### <Use of L-histidine or L-isoleucine in place of Allantoin>

Formulation 15 was the same formulation as Formulation 8, except that allantoin (2 mass%) in the solid raw materials was replaced with the same amount of L-histidine. Formulation 16 was the same formulation as Formulation 8, except that allantoin (2 mass%) in the solid raw materials was replaced with the same amount of L-isoleucine.

The solid raw materials of Formulation 10, Formulation 13, Formulation 15, and Formulation 16 were agitation-granulated by the same operation as described above, and the resulting granulated products were evaluated. Formulation 10, Formulation 13, Formulation 15, and Formulation 16 are shown in the following Table.

**[Table 12]**

| Component | Formulation 15 | Formulation 10 | Formulation 16 | Formulation 13 |
|---|---|---|---|---|
| Oxidized glutathione monoammonium salt | 5 | 5 | 5 | 5 |
| L-histidine | 2 | 20 | - | - |
| L-isoleucine | - | - | 2 | 20 |
| Inorganic salts | 90 | 72 | 90 | 72 |
| Carboxymethyl cellulose | 2 | 2 | 2 | 2 |
| Sodium linear alkyl benzene sulfonate | 1 | 1 | 1 | 1 |

| | | | | |
|---|---|---|---|---|
| Unit: mass% | | | | |

The following Tables show the evaluation results of the load on the motor of the granulator and the degree of sticking of the raw material to the wall of the device in the agitation granulation using the solid raw materials of Formulation 10, Formulation 13, Formulation 15, and Formulation 16.

**[Table 13]**

| | Formulation 15 | Formulation 10 | Formulation 16 | Formulation 13 |
|---|---|---|---|---|
| Load on motor (amperes) | 2.2 | 1.3 | 2.3 | 1.4 |
| Rating | + | + | + | + |

**[Table 14]**

| | Formulation 15 | Formulation 10 | Formulation 16 | Formulation 13 |
|---|---|---|---|---|
| Degree of sticking | ± | + | ± | + |

All publications, patents, and patent applications cited herein are incorporated herein by reference in their entirety.

The upper and/or lower limits of the numerical ranges herein may be arbitrarily combined to define a preferred range. For example, any upper limit and any lower limit of the numerical ranges may be combined to define a preferred range. Any upper limits of the numerical ranges may be combined to define a preferred range. Any lower limits of the numerical ranges may be combined to define a preferred range. A numerical range described herein with the term "to" includes the values presented before and after the term "to" as a lower limit and an upper limit, respectively.

It should be understood that throughout the present description, expressions in the singular include the plural, unless otherwise specified. Accordingly, the singular articles (e.g., "a", "an", and "the" in English) include plural references unless otherwise specified.

Although the present embodiments are described in detail above, the specific configuration is not limited to these embodiments, and the present disclosure encompasses any design modification within the scope which does not depart from the spirit of the present disclosure.

## Claims

1. A method for producing a granular composition comprising glutathione, the method comprising
granulating a raw material mixture comprising glutathione and a water-soluble nitrogen-containing fertilizer component, the water-soluble nitrogen-containing fertilizer component having a solubility of 10% or less in water at 20°C, the raw material mixture having a mineral support content of 1 mass% or less on a dry matter basis.

2. The method according to claim 1, wherein the nitrogen-containing fertilizer component is at least one component selected from the group consisting of allantoin, histidine, and isoleucine.

3. The method according to claim 1, wherein the nitrogen-containing fertilizer component is allantoin.

4. The method according to any one of claims 1 to 3, wherein the glutathione is oxidized glutathione.

5. The method according to any one of claims 1 to 4, wherein the raw material mixture comprises 40 parts by mass or more of the nitrogen-containing fertilizer component with respect to 100 parts by mass of the glutathione.

6. The method according to any one of claims 1 to 5, wherein the raw material mixture further comprises one or more inorganic salts selected from the group consisting of nitrogen-containing inorganic salts, phosphorus-containing inorganic salts, and potassium-containing inorganic salts, and
wherein the raw material mixture has a total content of the glutathione, the nitrogen-containing fertilizer component, and the inorganic salt of 70 mass% or more on a dry matter basis.
